# EUROPEAN PATENT SPECIFICATION

(11) **EP 4 052 449 B1**
(45) Date of publication and mention of the grant of the patent: **14.08.2024**
(21) Application number: 20797925.3
(22) Date of filing: 07.10.2020
(51) Int. Cl.: H04L 67/12

(54) **METHODS AND DEVICES FOR UNMANNED AERIAL SYSTEM TRACKING**
VERFAHREN UND VORRICHTUNGEN ZUM VERFOLGEN UNBEMANNTER LUFTFAHRTSYSTEME
PROCÉDÉS ET DISPOSITIFS DE SUIVI DE SYSTÈME AÉRIEN SANS PILOTE

(30) Priority: 31.10.2019 US 201962928539 P
(43) Date of publication of application: 07.09.2022
(73) Proprietor: InterDigital Patent Holdings, Inc., Wilmington, DE 19809 (US)
(72) Inventor: ROY, Arnab, Conshohocken, Pennsylvania 19428 (US); PRAGADA, Ravikumar, Conshohocken, Pennsylvania 19428 (US); FERDI, Samir, Montreal, Québec H3A3G4 (CA); PERRAS, Michelle, Montreal, Québec H3A3G4 (CA)
(74) Representative: Interdigital
(86) International application number: PCT/US2020/054528
(87) International publication number: WO 2021/086558

(56) References cited:
- WO-A1-2018/178752
- ANONYMOUS: "Managing drone air traffic with network services - Ericsson", 17 November 2017 (2017-11-17), XP093108683, Retrieved from the Internet <URL:https://www.ericsson.com/en/blog/2017/11/managing-drone-air-traffic-with-network-services> [retrieved on 20231204]

## Description

### BACKGROUND

The number of Unmanned Aerial Vehicles (UAV), often called drones, has been rapidly growing in recent years and the applications enabled by UAV are expanding into a wide variety of industries.
However, conventional Unmanned Aerial Systems (UAS), i.e. UAV and controller, mostly rely on direct point-to-point communication via the unlicensed Industrial, Scientific and Medical (ISM) radio bands, which limits the range of operation, and the communication is typically unreliable, insecure and with low data rates. To further unleash the potential of UAV applications, advanced cellular technologies such as Long-Term Evolution (LTE) and 5G may be utilized to enable Beyond Visual Line of Sight (BVLOS) operation and higher performance and more reliable communication for UAS.

Ubiquitous mobile network coverage can provide an operation range that is far beyond that limited by the point-to-point communication using ISM frequencies. Advanced communication capabilities, such as high bandwidth, low latency, guaranteed QoS, etc., of modern cellular networks (especially 5G network) can help improve the performance of UAV applications. Advanced security mechanisms of modern cellular networks can address security concerns involved in managing UAV applications. Documents WO 2018/178752 A1 (ERICSSON TELEFON AB L M [SE]) 4 October 2018 (2018-10-04) and Anonymous: "Managing drone air traffic with network services - Ericsson",, 17 November 2017 (2017-11-17), XP093108683,Retrieved from the Internet:URL:https:// www.ericsson.com/en/blog/2017/11/managing-drone-air-traffic-with-network-services [retrieved on 2023-12-04] represent background art in the field of UAV.

### SUMMARY

A vehicle control function, UCF, and a method for the UCF are described in claims 8 and 1, respectively.

Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### BRIEF DESCRIPTION OF THE DRAWINGS

Furthermore, like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
Figure 2 illustrates an exemplary system architecture for supporting UAS in 5G networks;
Figure 3 illustrates a method for network-provided tracking assistance to UAV-C according to an embodiment;
Figure 4 illustrates a method for network-provided tracking assistance to USS/UTM according to an embodiment; and
Figure 5 illustrates a method for network-assisted UAV tracking according to an embodiment.

### EXAMPLE NETWORKS FOR IMPLEMENTATION OF THE EMBODIMENTS

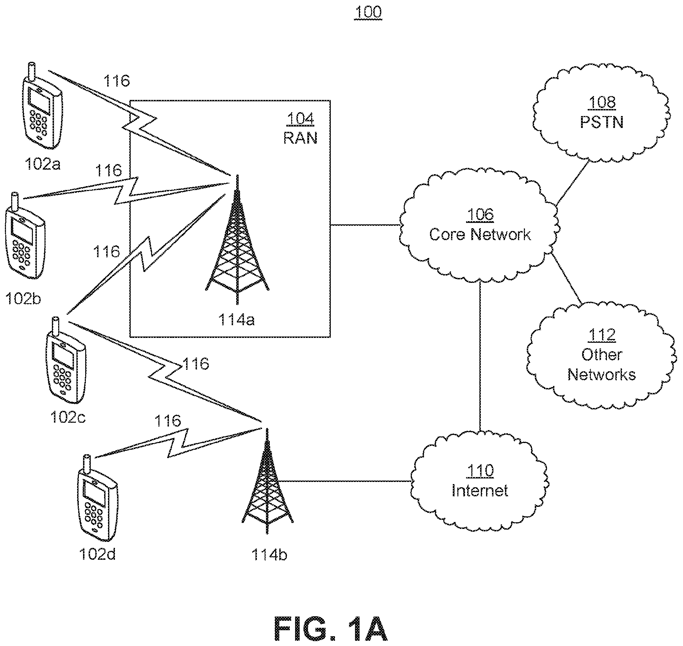

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g. remote surgery), an industrial device and applications (e.g. a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g. radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a in the RAN 104 and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a in the RAN 104 and the WTRUs 102a, 102b, 102c may implement a radio technology such as NR Radio Access, which may establish the air interface 116 using New Radio (NR).

In an embodiment, the base station 114a in the RAN 104 and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g. a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g. for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g. WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The other networks 112 may include wired and/or wireless communications networks owned and/or operated by other service providers. For example, the other networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g. the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

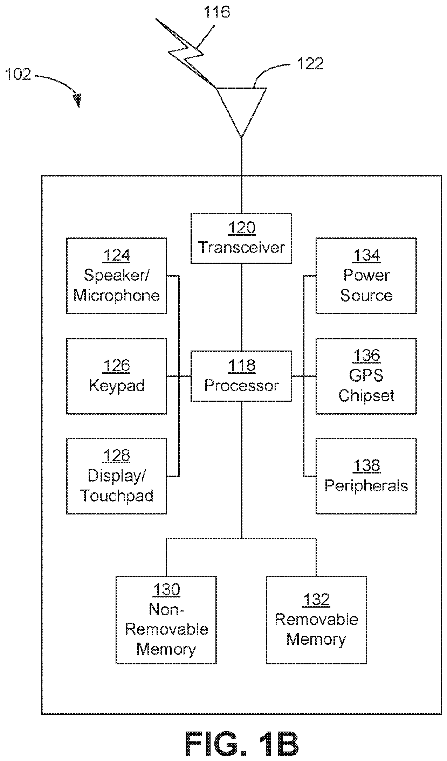

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a chipset 136 for a positioning system such as Global Positioning System (GPS), and/or other elements 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g. the base station 114a in FIG. 1A) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g. multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as N R and IEEE 802.11, for example.

The processor 118 of the WTRU 102 may be coupled to, and may receive user input data from, the speaker/microphone 124, the keypad 126, and/or the display/touchpad 128 (e.g. a liquid crystal display (LCD) display unit or organic light-emitting diode (OLED) display unit). The processor 118 may also output user data to the speaker/microphone 124, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g. nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g. longitude and latitude) regarding the current location of the WTRU 102. In addition to, or in lieu of, the information from the GPS chipset 136, the WTRU 102 may receive location information over the air interface 116 from a base station (e.g. base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements 138, which may include one or more software and/or hardware modules that provide additional features, functionality and/or wired or wireless connectivity. For example, the elements 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The elements 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g. associated with particular subframes for both the UL (e.g. for transmission) and downlink (e.g. for reception) may be concurrent and/or simultaneous. The full duplex radio may include an interference management unit to reduce and or substantially eliminate self-interference via either hardware (e.g. a choke) or signal processing via a processor (e.g. a separate processor (not shown) or via processor 118). In an embodiment, the WRTU 102 may include a half-duplex radio for which transmission and reception of some or all of the signals (e.g. associated with particular subframes for either the UL (e.g. for transmission) or the downlink (e.g. for reception)).

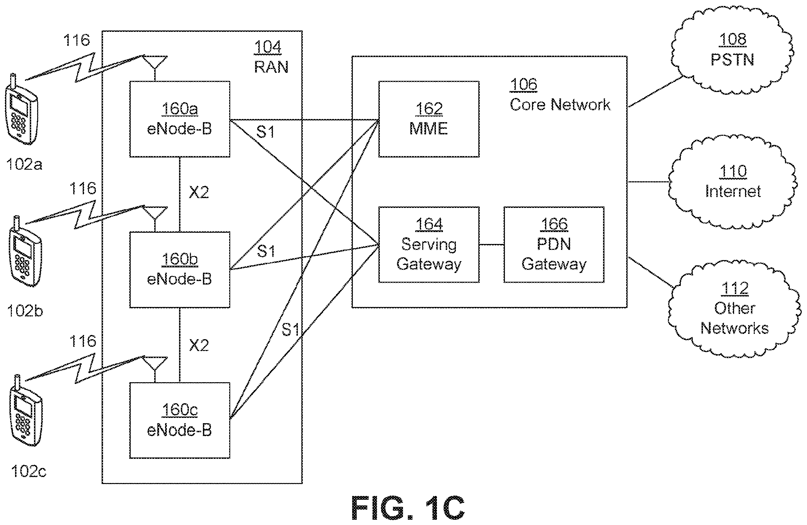

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g. an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g. temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g. directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g. all of the STAs) within or using the IBSS may communicate directly with each other. The IBSS mode of communication may sometimes be referred to herein as an "ad-hoc" mode of communication.

When using the 802.1 1ac infrastructure mode of operation or a similar mode of operations, the AP may transmit a beacon on a fixed channel, such as a primary channel. The primary channel may be a fixed width (e.g. 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g. every STA), including the AP, may sense the primary channel. If the primary channel is sensed/detected and/or determined to be busy by a particular STA, the particular STA may back off. One STA (e.g. only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g. only support for) certain and/or limited bandwidths. The MTC devices may include a battery with a battery life above a threshold (e.g. to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g. MTC type devices) that support (e.g. only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

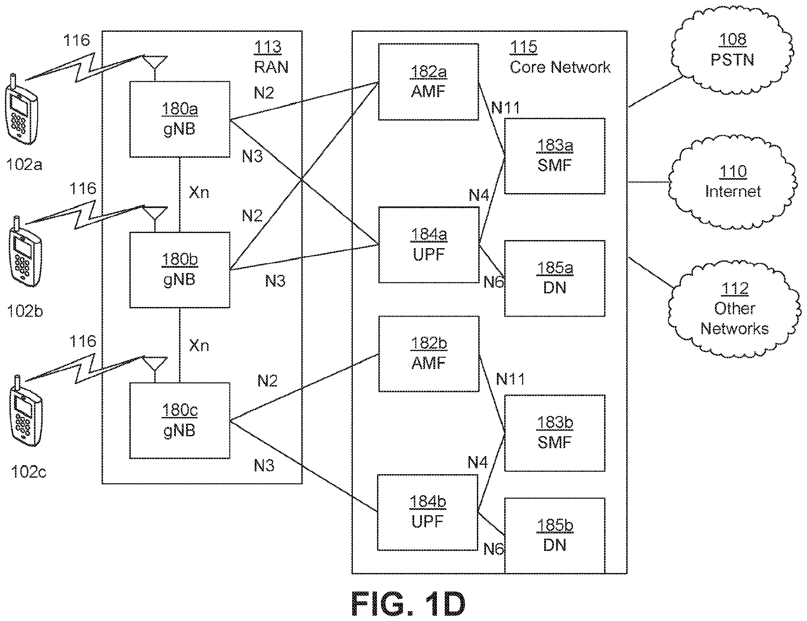

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b, 180c may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers (not shown) to the WTRU 102a. A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g. containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g. such as eNode-Bs 160a, 160b, 160c in FIG. 1C). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g. handling of different protocol data unit (PDU) sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g. an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g. testing) wired and/or wireless communication network in order to implement testing of one or more components. The one or more emulation devices may be test equipment. Direct RF coupling and/or wireless communications via RF circuitry (e.g. which may include one or more antennas) may be used by the emulation devices to transmit and/or receive data.

### DETAILED DESCRIPTION

3GPP has specified system requirements for supporting UAS in 3GPP network in 3GPP TS 22.125, "Unmanned Aerial System (UAS) support in 3GPP", V16.2.0, and work group SA2 is currently conducting a Study Item FS_ID_UAS-SA2 (3GPP SP-181114, "Study on supporting Unmanned Aerial Systems Connectivity, Identification and Tracking", 2018-12) to handle UAS connectivity, identification and tracking.

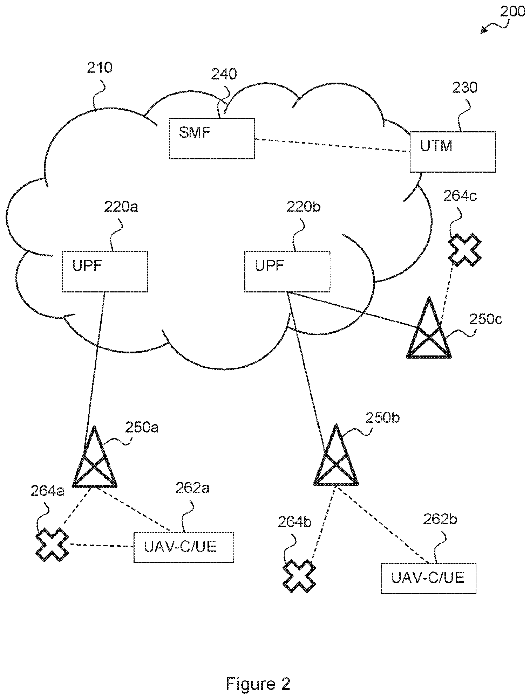

Figure 2 illustrates an exemplary system architecture for supporting UAS in 5G networks. The system 200 can include a 5G Core Network 210 with at least one User Plane Function (UPF) 220a, 220b and a Session Management Function (SMF) 240. The UPFs can be functionally connected to one or more antennas 250a, 250b, 250c. A UAS Traffic Management (UTM) function 230 is functionally connected to 5G Core Network 210, for example the SMF 240.

The system further includes UASs illustrating possible scenarios.

A first UAS example includes a controller 262a and an UAV 264a that both operate a connection to the 5G Network via an antenna 250a and a direct connection with one another.

A second UAS example includes a controller 262b and an UAV 264b that both operate a connection to the 5G Network via an antenna 250b, but do not have any direct interconnection and thus rely on the connections to the antenna 250b to communicate.

A third UAS example includes a controller 262b connected to one antenna 250b and a UAV 264c connected to another antenna 250c; communication between the controller 262b and the UAV 264c can thus pass via the 5G Core Network.

The UTM is a framework for UAS traffic management. The roles and responsibilities of UTMs and the procedures and protocols applied in UTMs is not within the scope of 3GPP study and can thus vary between e.g. regions or countries. From a 3GPP network's perspective, UTM is "a set of functions for authenticating UAV, authorizing UAS services, managing UAS policies and controlling UAV traffics in the airspace." (3GPP TS 22.125, already cited). Via the UTM, authorized users may for example query the identity of a UAV and its UAV-C and obtain metadata related to them. The UTM can store data required for UAS to operate. Air traffic control agencies can use the UTM server to authorize, enforce and regulate UAS operation.

In the system architecture in Figure 2, the UAS (UAV or UAV-C) can communicate with the UTM via the network User Plane for identification, authentication and authorization procedures and also for other command and control message/data exchanges. The 3GPP network functions (such as SMF, PCF) may have direct or indirect (e.g. via Network Exposure Function, NEF) control interfaces with the UTM.

A UAS (UAV and UAV-C) connected to a cellular network may involve various types of cellular communication for carrying out its missions, such as UAS - UTM communication, non-payload communication (Command & Control), and payload communication.

UAS - UTM communication: communication between UAS and UTM should be enabled for identification, authorization, and law enforcement activities. User Plane connection can be used between UAS and UTM, though it is also possible to use Control Plane communication between the two.

Non-payload communication (Command & Control, C2, sometimes also abbreviated as C&C): Command & Control message and data exchange is typically of critical importance for UAV missions and security concerns. Some C2 exchanges (e.g. location or flight data reporting) can take place between the UAV and the UTM, and between the UAV and its UAV-C.

Typical C2 communication types include (see GSMA, "Insights into supporting Unmanned Aircraft on Mobile Networks", V1.0): telemetry reporting from the UAV to the controller or the network, such as the UAV altitude and velocity; real-time remote flight control commands for non-autonomous UAVs; mission/flight plan/constraints/regulatory data update; and collision avoidance assistance information.

In general, C2 messages are small sizes and requires low data rates. However, different C2 message types may have different QoS requirements in terms of latency, data loss rate, etc. For example, pilot commands typically needs to be real-time while mission updates may tolerate a certain delay.

Payload communication: A UAV in mission may send payload data, such as real-time video or sensor data, to its UAV-C or a device in the network, e.g. an application server or storage. Such payload communication is typically uplink-heavy and downlink-light.

A UAV typically includes a positioning system such as circuits to calculate a position from signals received in a Global Navigation Satellite System (GNSS), for example GPS, GLONASS, Galileo and BeiDou. However, in at least some use cases it may be that the precision of the UAV positioning system is not sufficient.

In a first use case, the UAV-C can require precise UAV position information to perform regular flight operations. While this at times may be generally satisfied by conventional periodic UAV reports containing GNSS readings, there may be situations where greater precision of UAV position is required or when GNSS measurements are degraded.

GNSS-based UAV positioning may be less precise in some locations such as dense urban areas (street canyons) and it is known that GNSS system is less precise in the vertical plane. Further, in busy flight corridors, more precise UAV position may be required than what is independently possible using GNSS alone.

In addition, the UAV-C may want to verify a UAV reported position, in order to identify malfunctioning on-board positioning units or regions where GNSS performance is degraded.

In a second use case, a UAS Service Supplier (USS)/UTM may require UAV tracking information with greater precision than what is possible using the on-board GNSS unit. Further, this additional information may be selectively needed in portions of the UAV flight plan. What's more, the USS/UTM may want to independently verify the UAV and UAV-C supplied tracking information.

3GPP TS 22.125, already cited, specifies the following UAS tracking related requirements: "The 3GPP system shall support detection, identification and reporting of problematic UAV(s) and the UAV controller to a UTM" and "The 3GPP network should be able to provide supplement location information of UAV and its controller to a UTM. NOTE: This supplement may be trust-based (i.e. the [mobile network operator] MNO informs the UTM that the UAV position information is trusted) or it may be additional location information based on network information."

The USS/UTM may want to identify UAVs and UAV-Cs with tampered position reporting systems. The USS/UTM may also want to monitor the UAV's position when passing through areas of known degraded GNSS performance (e.g. street canyons in dense urban scenarios). Further, the USS/UTM may want to augment the UAV supplied tracking information with network derived positioning information to achieve greater combined accuracy.

In a third use case, the UAV may want to augment its internally derived positioning information (e.g. using on-board GNSS unit) in certain locations or situations. UAV's internal GNSS unit may not be able to provide positional information with enough precision as required by the UAV-C or the USS/UTM. Moreover, as already mentioned, this precision may not be sufficient in certain locations, such as in GNSS-deprived locations in certain dense urban areas.

3GPP positioning protocols, for both LTE and NR, enable the network to estimate UE location based on reported measurements, and uses several techniques such as Enhanced Cell Id (E-CID), Time Difference of Arrival (TDOA), and Reference Signal Time Difference (RSTD). While these techniques by themselves may not be more accurate than GNSS based positioning, since they are based on independent measurements, they may supplement and/or augment UAV-supplied GNSS measurements, thereby improving the overall accuracy, or they can be used to corroborate or verify the UAV reported values.

The UAS Control Function (UCF) 330 is a network entity providing positioning or tracking assistance to network entities, e.g. the UAV-C 320. Two architectural options are described. First, the UCF 330 queries the Location Server 340 and communicates with the network entity, e.g. UAV/UAV-C, via the Access and Mobility Management Function (AMF), not shown. Second, the UCF 330 communicates with the 5GC/Location Server 340 via the Network Exposure Function (NEF), not shown, and then communicates with the network entity, e.g. UAV/UAV-C, via the User Plane. When UCF 330 is part of the 5GC, all or parts of its functions described herein may be located with other functions (e.g. UAV-C provisioning of flight/segment related information in PCF).

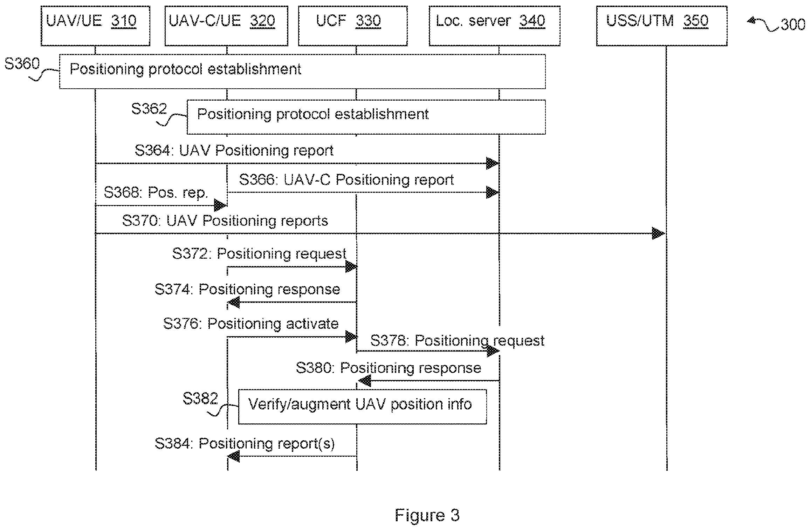

Figure 3 illustrates a method 300 for network-provided tracking assistance to UAV-C 320 according to an embodiment.

In the embodiment, it is assumed that the UAV-C 320 requires accurate UAV 310 position information. In some conventional cases, this may be provided by the UAV 310 using the on-board GNSS unit (not shown) or other means and may be part of the Command and Control (C2) communications between the UAV 310 and the UAV-C 320. However, the UAV-C 320 may require more precise tracking information, which can be provided through network assistance. It is noted that the UAV-reported tracking information can also be verified by the UAV-C 320 using network assistance.

In steps S360 and S362, a positioning protocol, e.g. the NR positioning protocol or the LTE positioning protocol, is established between the UAV 310 and the UAV-C 320, respectively, and the Location Server 340 in the network. Measurement configurations, such as the periodicity and positioning type (e.g. E-CID, A-GNSS, RSTD, etc.), can also be established as part of the protocol establishment.

In step S364, the UAV 310 reports position measurements related to the positioning protocol to the Location Server 340, e.g. its location coordinates. The reporting quantities, periodicities and other quantities are typically as per the configuration exchanged during the positioning protocol establishment.

In step S366, the UAV-C 320 can report position measurements related to the positioning protocol to the Location Server 340, e.g. its location coordinates. The reporting quantities, periodicities and other quantities are typically as per the configuration exchanged during the positioning protocol establishment.

The reported position measurements can be sent (essentially) periodically as part of 3GPP Positioning Protocol.

In step S368, the UAV 310 reports its position or tracking information to the UAV-C 320 as part of C2 communications. The relevant parameters such as precision, periodicity, etc. are typically determined during the configuration phase of C2 communications setup between the UAV 310 and the UAV-C 320. These reports may include readings from the on-board GNSS unit, and can be augmented by an inertial measurement unit, if available. These reports are typically sent (essentially) periodically.

In step S370, the UAV 310 reports its position or tracking information to the USS/UTM 350 as per requirements. These parameters are typically exchanged before flight authorization.

In step S372, the UAV-C 320 sends a UAS Positioning Request message to the UCF 330. This message can include UAS ID, the UAV flight plan that may include multiple segments, and required positioning or tracking quality for different flight stages. The UAS ID is an identity assigned by the USS/UTM to the UAV. The UAS ID may take one of the forms of the Remote ID described in ASTM WK65041 "Remote ID and Tracking Overview". The UAS ID may also be referred as a Civil Aviation Authority (CAA)-Level UAV ID.

It is noted that the positioning or tracking requirements (e.g. precision, periodicity, etc.) may be different for the UAV-C 320 and the USS/UTM 350. For example, the reporting parameters to the USS/UTM 350 may be determined by regulations, whereas the UAV-C 320 may require more frequent UAV 310 positioning/tracking information. These reports are typically sent (essentially) periodically.

The flight plan may include 3-dimensional waypoints (latitude, longitude, altitude) and associated flight volumes (i.e., the volume of space within which a UAV is expected to be located at a given time due to positioning and/or flight control tolerances). Further the flight plan may be divided into multiple flight segments. Each flight segment may have a different positioning or tracking quality requirement. This may be due to different levels of positioning or tracking quality available in different flight segments (e.g. due to different GNSS signal qualities due to known obstructions, etc.) or due to different levels of flight activities in each flight segment. The positioning or tracking requirement may include quantities such as precision, maximum tolerance, periodicity, etc.

Alternatively, the flight segments may be already known to the network and each segment may be assigned unique IDs during flight authorization. The flight segments identification information may be provisioned into the UAV-C 320 or the UAV 310 by the UCF 330 or PCF. In this alternative, the UAS Positioning Request can include the UAS ID, segment IDs and the associated requested positioning quality parameters. In another alternative, the UAS Positioning Request/Response messaging exchange is skipped and the UAV-C 320 may directly send the UAS Positioning Activate message, which will be described with regard to step S376.

In step S374, in response to the UAS Positioning Request message, the UCF 330 sends a UAS Positioning Response message that conveys the UCF's 330 ability to fulfill the positioning request from the UAV-C 320 in terms of the requested precision and tolerance for the specified flight segments. This may be signaled in the form of either "Accept" or "Reject" for each flight segment. Along with a "rejection" response, the UCF 330 may also include alternate values for specified parameters in the corresponding request such as precision and max tolerance for each flight segment. The UCF 330 may also include associated costs for different configurations of specified parameters such as precision and max tolerance for each flight segment.

The UCF 330 may determine its ability to fulfill the requested measurement quality for various flight segments by, for example, a) obtaining available positioning or tracking quality information for different network regions before-hand, e.g. from the Location Server 340, and by b) obtaining the available positioning or tracking quality information for the requested flight segments following the UAV-C request.

When the UAV 310 is already in flight and the flight plan changes, e.g. due to weather, collision avoidance or emergency reasons, or if the positioning reporting requirements change, then the UAV-C 320 may need to complete the UAS Positioning Request/Response message exchange.

It is noted that there may be multiple exchanges of UAS Positioning Request and UAS Positioning Response messages between the UAV-C 320 and the UCF 330 to determine a set of mutually acceptable positioning or tracking parameters.

In step S376, e.g. upon receiving the UAS Positioning Response message, the UAV-C 310 may transmit a UAS Positioning Activate message to the UCF 330 to signal conclusion of the positioning parameter negotiation phase and to activate positioning report transmission by the UAS Control Function.

In step S378, the UCF 330 sends a Positioning Request to the Location Server 340 including the UAS ID and the positioning configuration determined after negotiation with the UAV-C 320.

In step S380, the Location Server 340 sends available position information about the indicated UAV 310 to the UCF 330. The supplied UAV tracking or positioning information typically complies with the requested configuration in terms of the precision, periodicity, etc.

Alternatively, the UAV-C 320 may receive the UAV positioning/tracking information from the USS/UTM 350, if the UAV-C 320 is registered to the USS/UTM 350 to access the positioning service.

In step S382, the UCF 330, upon receiving the UAV positioning information from the Location Server 340 can augment the UE-supplied position information with the network-supplied position or tracking information and send it to the requesting UAV-C 320. By combining the UE supplied position estimate (e.g. using on-board GNSS receiver) with network positioning measurements, the UCF 330 can improve the precision of the UAV position or tracking information supplied to the UAV-C 320 relative to the UAV-derived position estimate (e.g. using on-board GNSS unit alone).

The UCF 330 can also verify the validity of the UE-reported position (e.g. using on-board GNSS receiver) by comparing this with reported network positioning estimates and report the result to the requesting UAV-C 320. In case a maximum tolerance value is configured, then the UCF 330 may notify the UAV-C 320 when the difference between the two measurements exceeds this tolerance. Alternatively, the UCF 330 may report the difference between the two measurements.

In step S384, the UCF 330 reports the UAV positioning or tracking information in the reported configuration to the requesting UAV-C 320. The report can include augmented UAV position information, the UCF's 330 assessment of the validity of the UAV reported positioning information, or both. Depending on the requested format, this report can be sent periodically, when the network reported UAV position differs from the UE reported value by a significant amount (e.g. exceeds a pre-configured threshold), or both.

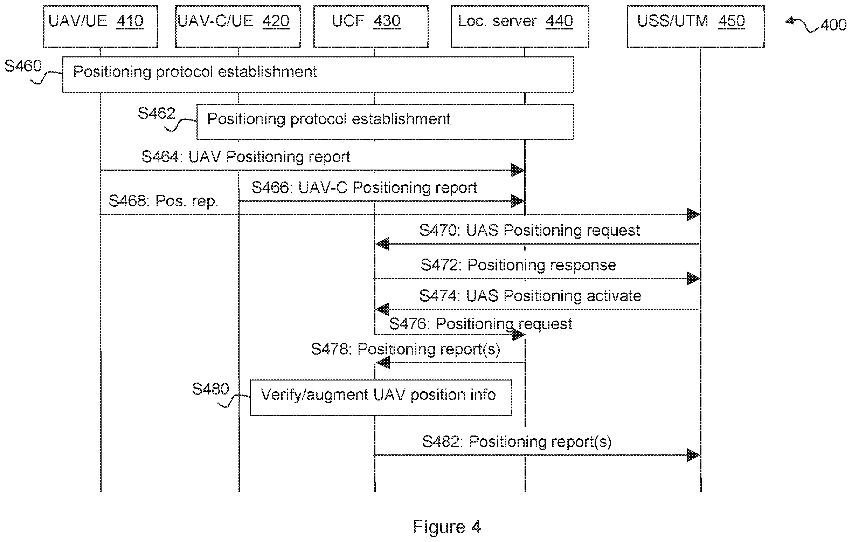

Figure 4 illustrates a method 400 for network-provided tracking assistance to USS/UTM 450 according to an embodiment.

In the embodiment, it is assumed that the USS/UTM 450 needs to be aware of the UAV's 410 position during its flight due to regulatory requirements. This position may be provided by the UAV 410 using the on-board GNSS unit or other means and may be part of the communication interface between the UAV 410 and the USS/UTM 450. However, as will be described, the USS/UTM 450 can obtain more precise UAV tracking information by utilizing network positioning assistance and, additionally, the UAV reported tracking information can be verified by the USS/UTM 450 by means of network assistance.

In steps S460 and S462, a positioning protocol is respectively established between UAV 410 and UAV-C 420, and the location server 440, for example as already described with reference to steps S360 and S362.

In step S464, the UAV 410 reports position measurements related to the positioning protocol to the Location Server 440, e.g. its location coordinates. The reporting quantities, periodicities and other quantities are typically as per the configuration exchanged during the positioning protocol establishment.

In step S466, the UAV-C 420 can report position measurements related to the positioning protocol to the Location Server 440, e.g. its location coordinates. The reporting quantities, periodicities and other quantities are typically as per the configuration exchanged during the positioning protocol establishment.

In step S468, the UAV 410 reports its position or tracking information to the USS/UTM 450 typically as per regulatory requirements (e.g. periodicity, precision, etc.) on the communication interface between the UAV 410 and the USS/UTM 450. The reporting configuration is normally supplied before flight authorization. These reports may include readings from the on-board GNSS unit, perhaps augmented by an inertial measurement unit, if available.

In step S470, the USS/UTM 450 sends a UAS Positioning Request message to the UCF 430. This message can include UAS ID, the UAV flight plan or a particular portion of a flight plan that may include multiple segments, required positioning or tracking quality for different flight stages. The UAS ID may take one of the forms of the Remote ID. The flight plan may include 3-dimensional waypoints (latitude, longitude, altitude) and associated flight volumes. Further the flight plan may be divided into multiple flight segments. Each flight segment may have a different positioning or tracking quality requirement. The particular portion of the flight plan may comprise or correspond to a particular geographical area of interest (e.g., for USS/UTM to detect when UAV approaches/enters/leaves a zone, perform geofencing). This may be due to different levels of positioning or tracking quality available in different flight segments (e.g. due to different GNSS signal qualities due to known obstructions, etc.), or due to different levels of flight activities in each flight segment. The positioning or tracking requirement may include quantities such as precision, maximum tolerance, periodicity, etc. The message may include an UAS ID for the associated UAV-C to request location information of UAV-C as part of the positioning reporting of the UAV.

Alternatively, the flight segments may be already known to the network and each segment may be assigned unique IDs during flight authorization. If so, the UAS Positioning Request can include the UAS ID, segment IDs and the associated requested positioning quality parameters, or in yet another alternative, the UAS Positioning Request/Response messaging exchange can be omitted and USS/UTM 450 may directly send the UAS Positioning Activate message, see step S474.

When the UAV 410 is already in flight and the flight plan changes, e.g. due to weather, collision avoidance or emergency reasons, or if the positioning reporting requirements change, then the USS/UTM 450 may need to complete the UAS Positioning Request/Response message exchange.

In step S472, upon reception of a UAS Positioning Request message from the USS/UTM 450, the UCF 430 responds with a UAS Positioning Response message that can convey the UCF's 430 ability to fulfill the positioning request from the USS/UTM 450 in terms of the requested precision and tolerance for the specified flight segments. The decision can be in the form of either "Accept" or "Reject" for each flight segment. Along with a rejection response, the UCF 430 may also include alternate values for specified parameters in the corresponding request such as precision and max tolerance for each flight segment. The UCF 430 may also include the associated costs for different configurations of specified parameters such as precision and max tolerance for each flight segment.

It is noted that there may be multiple exchanges of the UAS Positioning Request and UAS Positioning Response messages between the USS/UTM 450 and the UCF 430 to determine a set of mutually acceptable positioning or tracking parameters. These parameters may be determined based on requested positioning accuracy, requested location of interest size (e.g., maps to tracking area, cell coverage area or smaller).

In step S474, upon reception of the UAS Positioning Response message, the USS/UTM 450 may transmit a UAS Positioning Activate message to the UCF 430 to signal conclusion of the positioning parameter negotiation phase and to activate positioning report transmission by the UCF 430.

In step S476, the UCF 430 sends a Positioning Request to the Location Server 440 including for example the UAS ID of the UAV and the positioning configuration determined after negotiation with the USS/UTM 450 to obtain UAV's location information. Similar steps may be performed to obtain associated UAV-C's location information using the UAS ID of UAV-C. The positioning configuration may comprise network relative coordinates such a tracking area or cell id corresponding to the geographical area (longitude, latitude, altitude) of interest requested by the USS/UTM.

In step S478, the Location Server 440 sends available position information about the indicated UAV 410 to the UCF 430. The supplied UAV tracking or positioning information typically complies with the requested configuration in terms of the precision, periodicity, etc.

In step S480, the UCF 430, upon receiving the UAV positioning information from the Location Server 440 can augment the UE-supplied position information with the network-supplied position or tracking information and send it to the requesting USS/UTM 450. By combining the position estimate provided by the UE 410 (e.g. using on-board GNSS receiver) with network positioning measurements, the UCF 430 can improve the precision of the UAV position or tracking information supplied to the USS/UTM 450 relative to the UAV-derived position estimate (e.g. using on-board GNSS unit alone). Further still, the UCF 430 may forward the network positioning estimates of the UAV to the USS/UTM, which then compares it against the UAV-reported position (e.g., to detect any discrepancy).

The UCF 430 can also verify the validity of the UE-reported position (e.g. using on-board GNSS receiver) by comparing this with reported network positioning estimates and report the result to the requesting USS/UTM 450. In case a maximum tolerance value is configured, the UCF 430 may notify the USS/UTM 450 when the difference between the two measurements exceeds this tolerance. Alternatively, the UCF 430 may report the difference between the two measurements.

In step S482, the UCF 430 reports the UAV 410 and optionally, if requested, the UAV-C 420 positioning or tracking information in the reported configuration to the USS/UTM 450. The report may either contain augmented UAV (and possibly UAV-C) position information or may include the UCF's 430 assessment of the validity of the UAV (and possibly UAV-C) reported positioning information. Depending on the requested format, this report may be sent essentially periodically, when the network reported UAV or UAV-C position differs from the UE reported value by a significant amount (e.g. exceeds a pre-configured threshold), or both.

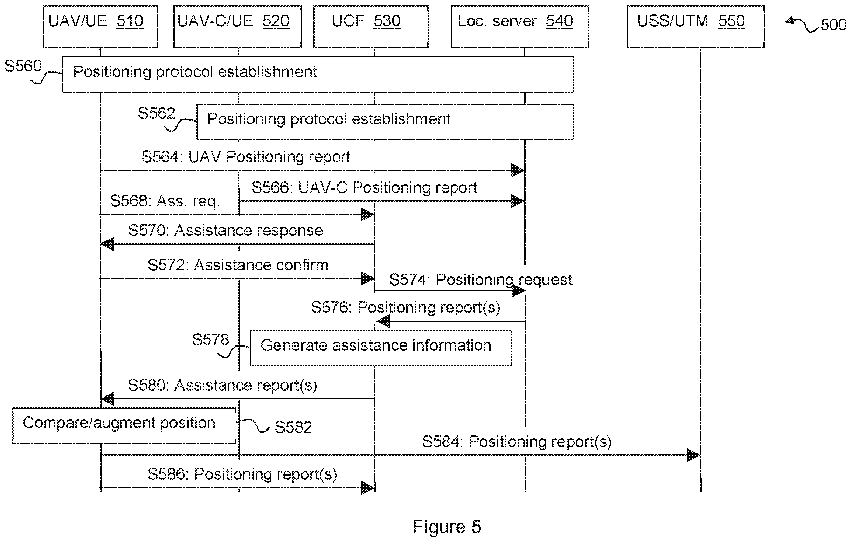

Figure 5 illustrates a method 500 for network-assisted UAV tracking according to an embodiment.

In the embodiment, it is assumed that at least one of the USS/UTM 550 and the UAV-C 520 may require accurate UAV position information during its flight. This may be provided by the UAV 510 using the on-board GNSS unit or other means. However, the UAV 510 can provide more precise positioning or tracking information when assisted by the network.

The UCF 530 is the network entity providing positioning or tracking assistance to the UAV-C 520 and the USS/UTM 550. It is noted that the UAV can be a trusted device.

In steps S560 and S562, a positioning protocol is established, for example as already described with reference to steps S360 and S362.

In step S564, the UAV 510 reports position measurements related to the positioning protocol to the Location Server 540, e.g. its location coordinates. The reporting quantities, periodicities and other quantities are typically as per the configuration exchanged during the positioning protocol establishment.

In step S566, the UAV-C 520 can report position measurements related to the positioning protocol to the Location Server 540, e.g. its location coordinates. The reporting quantities, periodicities and other quantities are typically as per the configuration exchanged during the positioning protocol establishment.

In step S568, the UAV 510 sends a UAS Positioning Assistance Request to the UCF 530. This message can include the UAS ID, the UAV flight plan that may include multiple flight segments, and required positioning or tracking quality for different flight stages. The UAS ID may take one of the forms of the Remote ID. The flight plan may include 3-dimensional waypoints (latitude, longitude, altitude) and associated flight volumes. Further the flight plan may be divided into multiple flight segments. Each flight segment may have a different positioning or tracking quality requirement. This may be due to different levels of positioning or tracking quality available in different flight segments (e.g. due to different GNSS signal qualities due to known obstructions, etc.), or due to different levels of flight activities in each flight segment. The positioning or tracking requirement may include quantities such as precision, maximum tolerance, periodicity, etc.

In step S570, upon reception of a UAS Positioning Assistance Request message from the UAV 510, the UCF 530 responds with a UAS Positioning Assistance Response message that can convey the UCF's 530 ability to fulfill the positioning request from the UAV 510, in terms of the requested precision and tolerance for the specified flight segments. The decision may be in the form of either "Accept" or "Reject" for each flight segment. Along with a "Reject," the UCF 530 may also include alternate values for specified parameters in the corresponding request such as precision and max tolerance for each flight segment. The UCF 530 may also include the associated costs for different configurations of specified parameters such as precision and max tolerance for each flight segment.

It is noted that there may be multiple exchanges of the UAS Positioning Assistance Request and UAS Positioning Assistance Response messages between the UAV 510 and the UCF 530 to determine a set of mutually acceptable positioning or tracking parameters.

In step S572, upon reception of the UAS Positioning Assistance Response message, the UAV 510 may transmit a UAS Positioning Assistance Confirm message to the UCF 530 to signal conclusion of the positioning parameter negotiation phase and to activate positioning report transmission by the UCF 530.

In step S574, the UCF 530 sends a Positioning Request to the Location Server 540, e.g. including the UAS ID and the positioning configuration determined after negotiation with the UAV 510.

In step S576, the Location Server 540 sends position information about the indicated UAV 510 to the UCF 530. The supplied UAV tracking or positioning information typically complies with the requested configuration in terms of the precision, periodicity, etc.

In step S578, the UCF 530, upon receiving the UAV positioning information from the Location Server 540, can populate a Positioning Assistance Report with the network-estimated UAV position estimate, or populate the Positioning Assistance Report with expected positioning measurements at requested waypoints along the flight plan according to the agreed configuration. This is referred as the set of nominal measurements.

In step S580, the UCF 530 sends the Positioning Assistance Report containing the requested positioning or tracking information to the UAV 510. The report may contain the network-estimated UAV position information or the nominal measurements for a range of waypoints along the reported flight plan. Depending on the requested format, this report may be sent essentially periodically or at the start of the UAV 510 flight when the nominal measurements for all the waypoints along the flight plan are reported to the UAV 510.

In step S582, the UAV 510 can for example, depending on format and configuration of the positioning assistance information:
- augment its own position estimate, e.g. obtained from an on-board GNSS receiver with the network supplied positioning or tracking information,
- compare its own position estimate, e.g. obtained from an on-board GNSS receiver, against the network supplied positioning or tracking information, and generate events based on the observed difference between the two values, and
- compare its positioning measurements (e.g. RSTD measurements) with the network supplied nominal values at configured waypoints, and generate events based on the difference between the two values.

In steps S584 and S586, the UAV 510 can populate and send the Positioning Report to, respectively, the UAV-C 520 and the USS/UTM 550 according to the accepted configuration. The Positioning Report may contain at least one of augmented UAV positioning or tracking information derived from combining the UAV estimated and network supplied UAV positioning or tracking information, an event identifier indicating the difference between the UAV estimated and network supplied UAV position, and an event identifier indicating the difference between the UAV estimated positioning measurement and the network supplied nominal value for one or more waypoints along the UAV flight plan. The Positioning Reports may be transmitted essentially periodically if augmented UAV positioning information is configured, when one of the configured positioning events is declared by the UAV, or both.

## Claims

1. A method for operation by a vehicle control device, the method comprising:
receiving, from a traffic management device, a first positioning request message comprising information indicating a vehicle system identity;
sending to a location server a second positioning request message comprising information indicating the vehicle system identity;
receiving positioning information for the vehicle system from the location server; and
on condition that a difference between the positioning information received from the location server and network-reported positioning information exceeds a tolerance value, sending to the traffic management device a positioning report message comprising information indicating the vehicle system identity and the difference.

2. The method of claim 1, wherein the positioning report message further comprises information indicating an identity of a vehicle controller associated with the vehicle system and positioning information of the vehicle controller.

3. The method of claim 1, wherein the first positioning request message further comprises information indicating an area of interest.

4. The method of claim 3, wherein the first positioning request message comprises information indicating a flight plan for the vehicle system, the flight plan comprising the area of interest.

5. The method of claim 4, wherein the flight plan comprises multiple flight segments.

6. The method of claim 1, wherein the positioning report message further comprises positioning configuration information for the vehicle system.

7. The method of claim 1, wherein the position reported by the vehicle system is the positioning information for the vehicle system received from the location server.

8. A vehicle control device comprising:
memory storing computer program instructions executable by a processor; and
a processor configured to execute the computer program instructions to:
receive, from a traffic management device, a first positioning request message comprising information indicating a vehicle system identity;
send to a location server a second positioning request message comprising information indicating the vehicle system identity;
receive positioning information for the vehicle system from the location server; and
on condition that a difference between the positioning information received from the location server and network-reported positioning information exceeds a tolerance value, send to the traffic management device a positioning report message comprising information indicating the vehicle system identity and the difference.

9. The vehicle control device of claim 8, wherein the positioning report message further comprises information indicating an identity of a vehicle controller associated with the vehicle system and positioning information of the vehicle controller.

10. The vehicle control device of claim 8, wherein the first positioning request message further comprises information indicating an area of interest.

11. The vehicle control device of claim 10, wherein the first positioning request message comprises information indicating a flight plan for the vehicle system, the flight plan comprising the area of interest.

12. The vehicle control device of claim 11, wherein the flight plan comprises multiple flight segments.

13. The vehicle control device of claim 8, wherein the positioning report message further comprises positioning configuration information for the vehicle system.

14. The vehicle control device of claim 8, wherein the position reported by the vehicle system is the positioning information for the vehicle system received from the location server.

## Patentansprüche

1. Verfahren zum Betrieb durch eine Fahrzeugsteuervorrichtung, wobei das Verfahren umfasst:
Empfangen einer ersten Positionsbestimmungs-Anforderungsnachricht, die Informationen umfasst, die eine Fahrzeugsystemidentität angeben, von einer Verkehrsmanagementvorrichtung;
Senden einer zweiten Positionsbestimmungs-Anforderungsnachricht, die Informationen umfasst, die die Fahrzeugsystemidentität angeben, an einen Ortsserver;
Empfangen von Positionsbestimmungsinformationen für das Fahrzeugsystem von dem Ortsserver; und
Senden einer Positionsbestimmungs-Berichtsnachricht, die Informationen umfasst, die die Fahrzeugsystemidentität und die Differenz angeben, an die Verkehrsmanagementvorrichtung unter der Bedingung, dass eine Differenz zwischen den von dem Ortsserver empfangenen Positionsbestimmungsinformationen und durch ein Netz berichteten Positionsbestimmungsinformationen einen Toleranzwert übersteigt.

2. Verfahren nach Anspruch 1, wobei die Positionsbestimmungs-Berichtsnachricht ferner Informationen umfasst, die eine Identität eines dem Fahrzeugsystem zugeordneten Fahrzeugcontrollers und Positionsbestimmungsinformationen des Fahrzeugcontrollers angeben.

3. Verfahren nach Anspruch 1, wobei die erste Positionsbestimmungs-Anforderungsnachricht ferner Informationen umfasst, die einen interessierenden Bereich angeben.

4. Verfahren nach Anspruch 3, wobei die erste Positionsbestimmungs-Anforderungsnachricht Informationen umfasst, die einen Flugplan für das Fahrzeugsystem angeben, wobei der Flugplan den interessierenden Bereich umfasst.

5. Verfahren nach Anspruch 4, wobei der Flugplan mehrere Flugabschnitte umfasst.

6. Verfahren nach Anspruch 1, wobei die Positionsbestimmungs-Berichtsnachricht ferner Positionsbestimmungs-Konfigurationsinformationen für das Fahrzeugsystem umfasst.

7. Verfahren nach Anspruch 1, wobei die durch das Fahrzeugsystem berichtete Position die von dem Ortsserver empfangenen Positionsbestimmungsinformationen für das Fahrzeugsystem sind.

8. Fahrzeugsteuervorrichtung, die umfasst:
Speicher, der Computerprogrammanweisungen speichert,
die durch einen Prozessor ausführbar sind; und einen Prozessor, der dafür konfiguriert ist, die Programmanweisungen auszuführen zum:
Empfangen einer ersten Positionsbestimmungs-Anforderungsnachricht, die Informationen umfasst, die eine Fahrzeugsystemidentität angeben, von einer Verkehrsmanagementvorrichtung;
Senden einer zweiten Positionsbestimmungs-Anforderungsnachricht, die Informationen umfasst, die die Fahrzeugsystemidentität angeben, an einen Ortsserver;
Empfangen von Positionsbestimmungsinformationen für das Fahrzeugsystem von dem Ortsserver; und
Senden einer Positionsbestimmungs-Berichtsnachricht,
die Informationen umfasst, die die Fahrzeugsystemidentität und die Differenz angeben, an die Verkehrsmanagementvorrichtung unter der Bedingung, dass eine Differenz zwischen den von dem Ortsserver empfangenen Positionsbestimmungsinformationen und durch ein Netz berichteten Positionsbestimmungsinformationen einen Toleranzwert übersteigt.

9. Fahrzeugsteuervorrichtung nach Anspruch 8, wobei die Positionsbestimmungs-Berichtsnachricht ferner Informationen umfasst, die eine Identität eines dem Fahrzeugsystem zugeordneten Fahrzeugcontrollers und Positionsbestimmungsinformationen des Fahrzeugcontrollers angeben.

10. Fahrzeugsteuervorrichtung nach Anspruch 8, wobei die erste Positionsbestimmungs-Anforderungsnachricht ferner Informationen umfasst, die einen interessierenden Bereich angeben.

11. Fahrzeugsteuervorrichtung nach Anspruch 10, wobei die erste Positionsbestimmungs-Anforderungsnachricht Informationen umfasst, die einen Flugplan für das Fahrzeugsystem angeben, wobei der Flugplan den interessierenden Bereich umfasst.

12. Fahrzeugsteuervorrichtung nach Anspruch 11, wobei der Flugplan mehrere Flugabschnitte umfasst.

13. Fahrzeugsteuervorrichtung nach Anspruch 8, wobei die Positionsbestimmungs-Berichtsnachricht ferner Positionsbestimmungs-Konfigurationsinformationen für das Fahrzeugsystem umfasst.

14. Fahrzeugsteuervorrichtung nach Anspruch 8, wobei die durch das Fahrzeugsystem berichtete Position die von dem Ortsserver empfangenen Positionsbestimmungsinformationen für das Fahrzeugsystem sind.

## Revendications

1. Procédé destiné à être utilisé par un dispositif de contrôle de véhicule, le procédé comprenant :
la réception, en provenance d'un dispositif de gestion du trafic, d'un premier message de demande de positionnement comprenant des informations indiquant l'identité d'un système de véhicule ;
l'envoi à un serveur de localisation d'un deuxième message de demande de positionnement comprenant des informations indiquant l'identité du système de véhicule ;
la réception d'informations de positionnement pour le système de véhicule en provenance du serveur de localisation ; et
à condition qu'une différence entre les informations de positionnement reçues du serveur de localisation et les informations de positionnement rapportées par le réseau dépasse une valeur de tolérance, l'envoi au dispositif de gestion du trafic d'un message de rapport de positionnement comprenant des informations indiquant l'identité du système du véhicule et la différence.

2. Procédé selon la revendication 1, dans lequel le message de rapport de positionnement comprend en outre des informations indiquant l'identité d'un contrôleur de véhicule associé au système de véhicule et des informations de positionnement du contrôleur de véhicule.

3. Procédé selon la revendication 1, dans lequel le premier message de demande de positionnement comprend en outre des informations indiquant une zone d'intérêt.

4. Procédé selon la revendication 3, dans lequel le premier message de demande de positionnement comprend des informations indiquant un plan de vol pour le système de véhicule, le plan de vol comprenant la zone d'intérêt.

5. Procédé selon la revendication 4, dans lequel le plan de vol comprend plusieurs segments de vol.

6. Procédé selon la revendication 1, dans lequel le message de rapport de positionnement comprend en outre des informations de configuration de positionnement pour le système de véhicule.

7. Procédé selon la revendication 1, dans lequel la position signalée par le système de véhicule correspond aux informations de positionnement pour le système de véhicule reçues du serveur de localisation.

8. Dispositif de contrôle de véhicule comprenant :
une mémoire dans laquelle sont stockées des instructions de programme d'ordinateur exécutables par un processeur ; et
un processeur configuré pour exécuter les instructions de programme d'ordinateur pour :
recevoir, en provenance d'un dispositif de gestion du trafic, un premier message de demande de positionnement comprenant des informations indiquant l'identité d'un système de véhicule ;
envoyer à un serveur de localisation un deuxième message de demande de positionnement comprenant des informations indiquant l'identité du système de véhicule ;
recevoir des informations de positionnement pour le système de véhicule en provenance du serveur de localisation ; et
à condition qu'une différence entre les informations de positionnement reçues du serveur de localisation et les informations de positionnement rapportées par le réseau dépasse une valeur de tolérance, envoyer au dispositif de gestion du trafic un message de rapport de positionnement comprenant des informations indiquant l'identité du système de véhicule et la différence.

9. Dispositif de contrôle de véhicule selon la revendication 8, dans lequel le message de rapport de positionnement comprend en outre des informations indiquant l'identité d'un contrôleur de véhicule associé au système de véhicule et des informations de positionnement du contrôleur de véhicule.

10. Dispositif de contrôle de véhicule selon la revendication 8, dans lequel le premier message de demande de positionnement comprend en outre des informations indiquant une zone d'intérêt.

11. Dispositif de contrôle de véhicule selon la revendication 10, dans lequel le premier message de demande de positionnement comprend des informations indiquant un plan de vol pour le système de véhicule, le plan de vol comprenant la zone d'intérêt.

12. Dispositif de contrôle de véhicule selon la revendication 11, dans lequel le plan de vol comprend plusieurs segments de vol.

13. Dispositif de contrôle de véhicule selon la revendication 8, dans lequel le message de rapport de positionnement comprend en outre des informations de configuration de positionnement pour le système de véhicule.

14. Dispositif de contrôle de véhicule selon la revendication 8, dans lequel la position signalée par le système de véhicule correspond aux informations de positionnement pour le système de véhicule reçues du serveur de localisation.
